# EUROPÄISCHE PATENTSCHRIFT

(11) **EP 2 350 638 B1**
(45) Veröffentlichungstag und Bekanntmachung des Hinweises auf die Patenterteilung: **20.02.2019**
(21) Anmeldenummer: 09749094.0
(22) Anmeldetag: 03.11.2009
(51) Int. Cl.: G01N 29/22, G01N 29/265

(54) **VERFAHREN UND VORRICHTUNG ZUR ULTRASCHALLPRUEFUNG EINES BAUTEILS**
METHOD AND DEVICE FOR ULTRASONIC TESTING OF A COMPONENT
PROCÉDÉ ET DISPOSITIF POUR LE CONTRÔLE PAR ULTRASONS D'UN COMPOSANT

(30) Priorität: 03.11.2008 DE 102008037517
(43) Veröffentlichungstag der Anmeldung: 03.08.2011
(73) Patentinhaber: GE Inspection Technologies GmbH, 50354 Hürth (DE)
(72) Erfinder: KOCH, Roman, 63825 Blankenbach (DE); DE ODORICO, Walter, 65779 Kelkheim (DE)
(74) Vertreter: Patentanwälte Bauer Vorberg Kayser
(86) Internationale Anmeldenummer: PCT/EP2009/064563
(87) Internationale Veröffentlichungsnummer: WO 2010/060758

(56) Entgegenhaltungen:
- DE-B3- 10 349 948
- US-A- 4 279 158
- US-A- 5 567 881
- US-A1- 2002 017 140
- US-A1- 2006 236 769
- US-A1- 2006 243 051

## Beschreibung

Die Erfindung bezieht sich auf eine Vorrichtung zur Ultraschallprüfung eines sich von einer Oberfläche (X-Z-Richtung) eines flächigen Bauteils quer zur X-Z-Ebene abstehenden wie in Y-Richtung erstreckenden und in Z-Richtung verlaufenden streifenförmigen Bauteilabschnitts wie Längsversteifungsträger mittels lokaler Tauchtechnik.

Eine Vorrichtung der eingangs genannten Art ist aus der US-A-2006/0243051 bekannt.

Die Vorrichtung umfasst eine Prüfkopfanordnung mit Prüfkopfhaltern, die parallel zu einem zu prüfenden Bauteilabschnitt ausgerichtet sind. Zumindest einer der Prüfkopfhalter ist entlang von Führungsschienen quer zu dem Bauteilabschnitt verschiebbar angeordnet und in einer bestimmten Stellung fixierbar. Die Prüfkopfanordnung kann per Hand, semiautomatisch oder vollautomatisch entlang des zu prüfenden Bauteilabschnitts geführt werden.

Aus der US-B-5,567,881 ist ein Verfahren und eine Vorrichtung zur Ultraschallprüfung von Unregelmäßigkeiten aufweisender Oberflächen bekannt. Die Vorrichtung umfasst einen Prüfkopf, der in mehreren Freiheitsgraden beweglich angeordnet ist.

Eine weitere Vorrichtung der eingangs genannten Art ist in der US-A-2007/0044563 beschrieben. Die Vorrichtung umfasst einen Sensorhalter der ausgebildet ist, um ein oder mehrere lineare Ultraschallsensoren aufzunehmen. Die Vorrichtung liegt mit Rollen auf dem zu prüfenden flächigen Bauteil und wird durch einen Benutzer entlang des zu prüfenden streifenförmigen Bauteilabschnitts geführt. Die Ultraschallsensoren können parallel oder im Wesentlichen parallel zu den zu prüfenden Flächen ausgerichtet werden, wobei ein Abstand zu der zu prüfenden Oberfläche mittels Stellschrauben einstellbar ist.

In der US-B-7,464,596 ist eine Vorrichtung zur Ultraschallprüfung von Profilen beispielsweise U-Profilen beschreiben. Die Vorrichtung umfasst zwei Sensorhalter, von denen zumindest ein Sensorhalter entlang von Führungsschienen verschiebbar angeordnet ist, so dass diese Schwankungen des zu prüfenden Profils ausgleichen kann.

Aus der US-B-4,848,159 ist ein Ultraschallsensor zur Prüfung laminierter Strukturen wie T- oder Doppel-T-Profile bekannt. Die Vorrichtung ist insbesondere ausgebildet, um Fehler im Radiusbereich und angrenzenden Gebieten der laminierten Struktur zu erkennen. Der Sensor umfasst eine Vielzahl von Gleitern, die derart angeordnet sind, um eine koordinierte Bewegung relativ zu dem zu überprüfenden Teil zu gewährleisten. Der Halter umfasst eine Vielzahl von Ultraschalltransducer.

In der DE-B-103 49 948 ist ein Verfahren und eine Vorrichtung zur Prüfung eines eine komplexe Oberflächekontur aufweisenden Bauteils mittels Ultraschall beschrieben. Ein Prüfkopf wird dabei mittels eines Mehrachsenmanipulators entlang einer Raumkurve in einem Abstand parallel zu der Oberfläche des zu prüfenden Bauteils verfahren. Dabei werden Achsantriebe eines Manipulators entlang von vorbestimmten Stützpunkten synchron verfahren, wobei ein Trigger-Antrieb synchronisiert mit den Achsantrieben angesteuert und zusammen mit allen in Eingriff befindlichen Achsantrieben entsprechend einer vorbestimmten die Oberflächenkontur wiedergebenden Oberflächenlinie verfahren wird.

Die WO-A-03/065788 bezieht sich auf ein Verfahren und eine Vorrichtung zur akustischen Mikroskopie. Das System umfasst einen Controller und einen "JIG", welcher entfernbar an dem zu prüfenden Objekt angebracht ist. Der "JIG" umfasst einen akustischen Transducer, welcher mit dem Controller in Verbindung ist, der die Position des akustischen Transducer steuert. Der "JIG" ist angepasst, um den Controller in die Lage zu versetzen, den akustischen Transducer über dem Objekt zu verfahren und dessen Position während des Scans derart einzustellen, um Konturen des gescannten Abschnittes des Objektes zu kompensieren.

An die Ultraschallprüfung von Flugzeug-Konstruktionsteilen werden besonders hohe Anforderungen gestellt. So besteht nicht nur die Forderung, großflächige Außenwandungen mittels Ultraschall zu prüfen, sondern auch vorzugsweise auf einer Innenseite des Bauteils angebrachte so genannte Längsversteifungsträger (Stringer) einer Ultraschallprüfung zu unterziehen. In manchen Fällen können die Längsversteifungsträger separat getestet werden, bevor diese in ein weiteres Konstruktionselement integriert werden.

Durch Einführung von Faserverbundwerkstoffen in den Flugzeugbau können auch großflächige Komponenten unmittelbar mit integrierten Längsversteifungsträgern hergestellt werden, so dass diese im fertigen Zustand, d. h. als integrierte Einheit überprüft werden müssen.

Eine besondere Herausforderung bei der Ultraschallprüfung stellt der Übergangsbereich zwischen dem Längsversteifungsträger und der zu versteifenden Oberfläche des Konstruktionselements dar. Dieser Übergang wird als "Fuß" bezeichnet und stellt hinsichtlich der Ultraschallprüfung besondere Herausforderungen, da dieser Übergangsbereich in vielen Fällen schwer zugänglich ist.

Um eine ausreichende Prüfung dieses Übergangsbereichs sowie der Längsversteifungsträger selbst sicherzustellen, ist eine präzise Nachführung an Kontur- und Verlaufsänderungen des Übergangsbereichs und/oder des Profils des Längsversteifungsträgers im Bereich von < 1 mm über eine Längsersteckung des Längsversteifungsträgers im Bereich von > 5 m notwendig.

Aufgrund obiger Anforderungen erfolgte die Ultraschallprüfung derartiger Komponenten bisher durch manuelle Überprüfung, da eine automatische Überprüfung aufgrund der schwierigen geometrischen und räumlichen Verhältnisse sehr präzise Prüfkopfhalterungen und Führungen verlangte, die sehr kostspielig und aufwendig sind.

Davon ausgehend liegt der vorliegenden Erfindung die Aufgabe zugrunde eine Vorrichtung der eingangs genannten Art derart weiterzubilden, dass dieses bei einfacher Ausführungsform eine hohe Genauigkeit liefert.

Die Aufgabe wird u. a. durch die Merkemale des Anspruch 1 gelöst.

Durch das erfindungsgemäße Verfahren wird erreicht, dass die durch die Handhabungsmaschine verfahrbare Prüfkopfhalterung und/oder der Prüfkopf in mehreren Freiheitsgraden relativ zu dem Bauteil und/oder Bauteilabschnitt beweglich gelagert ist. Somit kann der Prüfkopf minimalen Verlaufsänderungen bzw. Konturänderungen des Bauteils oder Bauteilabschnitts folgen, ohne dass die Handhabungsmaschine entsprechende Korrekturbewegungen ausführen muss.

Es entfällt ein zeitaufwendiges Setup der Anlage und im Vergleich zur manuellen Überprüfung eine sehr schnelle, reproduzierbare und automatisierte Prüfung.

Da die Steuerung entlastet wird, kann die Prüfung insgesamt schneller ausgeführt werden.

Durch die Ausführung der Prüfkopfanordnung als Prüfkopfhalter sowie Gegenhalter wird eine klammerförmige Anordnung geschaffen, durch die der Prüfkopf stets in Kontakt mit der Seitenfläche des zu prüfenden Bauteils ist.

Eine lokale Tauchtechnik wird dadurch realisiert, dass ein zwischen Prüfkopfhalter und Gegenhalter gebildeter, und den Bauteilabschnitt aufweisender Zwischenraum vollständig mit aus dem Prüfkopfhalter ausströmendem Wasser überflutete ist.

Die von dem Prüfkopf aufgenommenen Messwerte werden vorzugsweise mittels eines Amplituden-Laufzeit-Ortskurven-Verfahrens (ALOK-Verfahren) und/oder einer Standard-Blendenauswertung aufgezeichnet und ausgewertet.

Aufgrund der besonderen Ausführung einerseits der Prüfkopfanordnung und andererseits der Aufhängung mittels Gravitationsausgleichsvorrichtung sind Prüfgeschwindigkeiten im Bereich von 100 mm/s bis 500 mm/s vorzugsweise 200 mm/s in Längsrichtung möglich.

Die Führungsschiene ist um eine in Z-Richtung verlaufende Achse drehbeweglich gelagert. Ferner ist die Prüfkopfanordnung über die als Gravitationsausgleichsvorrichtung ausgebildete Haltevorrichtung in Y-Richtung höhenbeweglich, vorzugsweise schwimmend gelagert.

Zur Steuerung von Gegenhalter und Prüfkopfhalter ist ein Betätigungselement wie Pneumatikzylinder vorgesehen.

Damit der Prüfkopfhalter federvorgespannt an der Seitenfläche des zu prüfenden Bauteils anliegt sind Prüfkopfhalter und Gegenhalter über ein Federelement wie Zugfeder miteinander gekoppelt.

Endpositionen des Prüfkopfhalters sowie des Gegenhalters werden mittels eines Endschalters wie Näherungsschalters erfasst.

Eine weitere bevorzugte Ausführungsform der Vorrichtung zeichnet sich dadurch aus, dass der Prüfkopfhalter und der Gegenhalter jeweils eine an den Seitenflächen des Bauteilabschnitts anliegende Gleitplatte aufweisen, wobei die Gleitplatte des Prüfkopfhalters eine sich in Y-Richtung erstreckende schlitzförmige Öffnung mit einer obenseitigen Öffnung aufweist, wobei die Höhenerstreckung (Y-Richtung) der schlitzförmigen Öffnung größer ist als eine Höhe des Bauteilabschnitts und dass die Gleitplatte des Gegenhalters in Y-Richtung verlaufende Nuten aufweist.

Dabei können die Gleitplatten bzw. Gleitelemente aus einem Kunststoff ausgebildet sein.

Um die Bewegung der Prüfkopfanordnung entlang des zu prüfenden Bauteils zu vereinfachen, ist vorgesehen, dass der Prüfkopfhalter auf eine Unterseite Stütz- und Führungselemente wie Rolle zur Abstützung und Führung auf dem zu prüfenden Bauteil aufweist.

Der Prüfkopfhalter weist vorzugsweise einen quaderförmigen, vorzugsweise metallischen Grundkörper auf, mit einer eine Wasserkamera ausbildende Ausfräsung, welche durch die Gleitplatte abgedeckt ist, wobei in einer der Gleitplatte gegenüberliegenden Wandung eine Aussparung zur Aufnahme des Prüfkopfes ausgebildet ist und wobei in Seitenwänden des Grundkörpers in die Wasserkammer mündende Zuläufe angeordnet sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsformen.

Es zeigen:
- Fig. 1: eine Vorrichtung zur Ultraschallprüfung eines Bauteils,
- Fig. 2: eine perspektivische Ansicht von links einer Prüfkopfanordnung,
- Fig. 3: eine perspektivische Ansicht der Prüfkopfanordnung gemäß Fig. 2 von rechts,
- Fig. 4: eine Vorderansicht der Prüfkopfanordnung,
- Fig. 5: eine Seitenansicht der Prüfkopfanordnung,
- Fig. 6: eine Rückansicht der Prüfkopfanordnung,
- Fig. 7: eine Draufsicht der Prüfkopfanordnung, und
- Fig. 8: eine Schnittdarstellung eines Prüfkopfes.

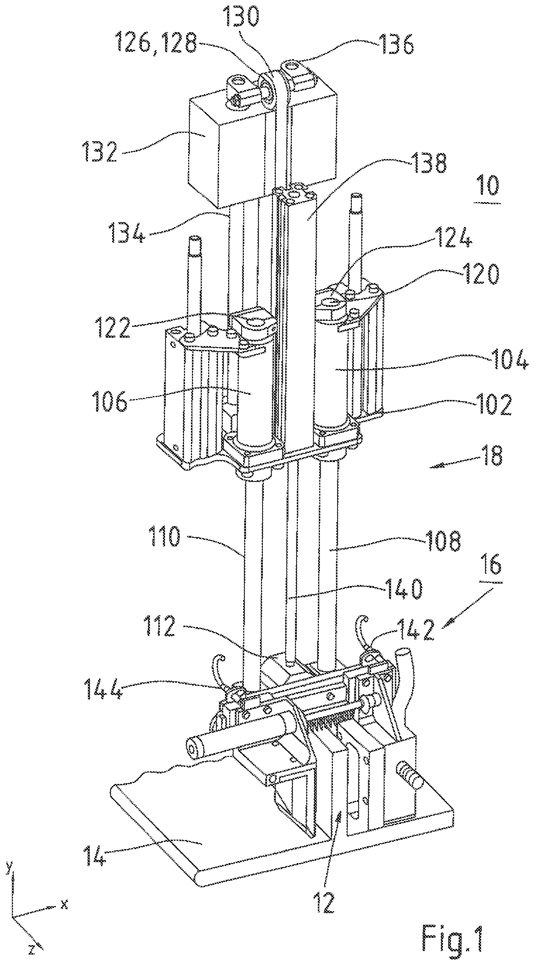

Fig. 1 zeigt eine Vorrichtung zur Ultraschallprüfung eines Bauteilabschnitts 12 wie Längsversteifungsträgers, welcher sich bezogen auf ein der Fig. 1 zu entnehmendes rechtwinkliges kartesisches Koordinatensystem in Y-Richtung von einer in einer X-Z-Ebene liegende Oberfläche (X-Z-Richtung) eines flächigen Bauteils 14 erstreckt.

Die Angaben in Fig. 1 hinsichtlich der X-, Y- und Z-Achse werden in der Anmeldung berücksichtigt.

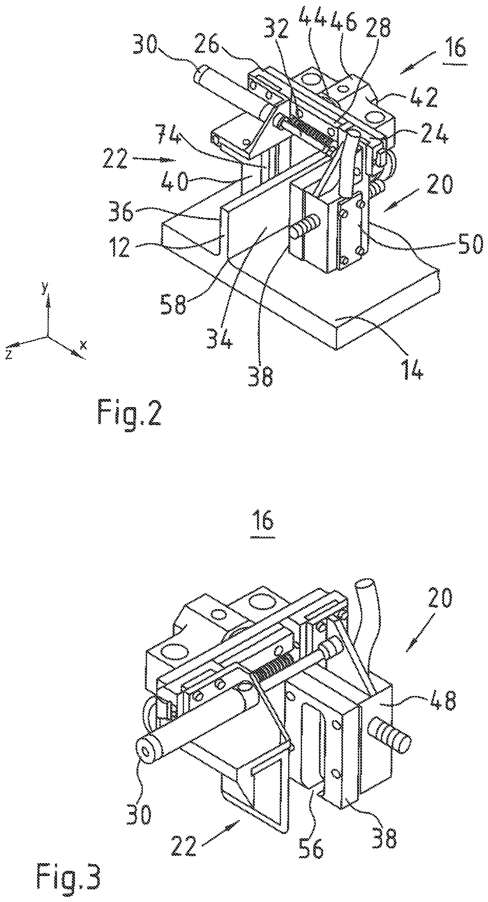

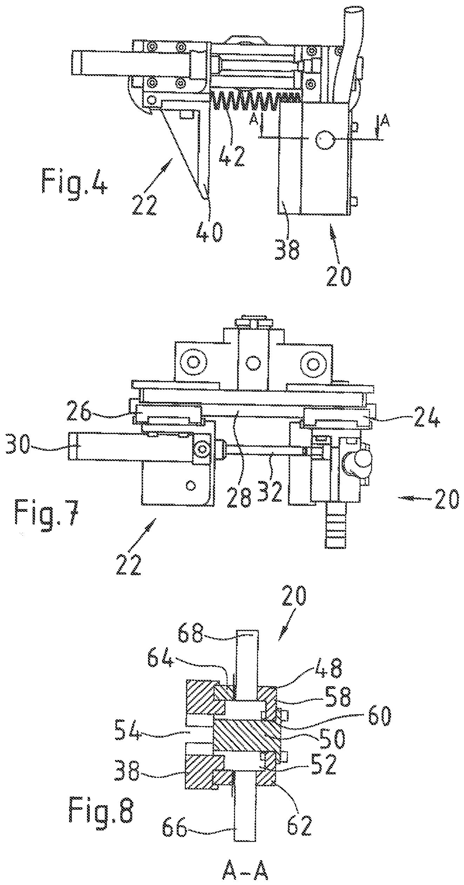

Die Prüfung erfolgt mittels lokaler Tauchtechnik. Die Vorrichtung 10 umfasst eine Prüfkopfanordnung 16, welche über eine Haltevorrichtung 18 wie Gravitationsausgleichsvorrichtung mit einer Handhabungsmaschine wie Portalroboter (nicht dargestellt) entlang des Längsversteifungsträgers 12 verfahrbar ist. Die Prüfkopfanordnung 16 ist im Detail durch die Fig. 2 bis 8 dargestellt.

Die Prüfkopfanordnung 16 umfasst eine Prüfkopfhalterung 20 sowie eine Gegenhalterung 22, die über jeweils ein Führungselement 24, 26 entlang einer in X-Richtung, d. h. quer zur Längserstreckung des Längsversteifungsträgers 12 sich erstreckenden Führungsschiene verschiebbar angeordnet sind. An der Gegenhalterung 22 ist ein Betätigungselement wie Pneumatikzylinder 30 befestigt, welcher über eine Betätigungsstange 32 mit der Prüfkopfhalterung 20 gekoppelt ist. Mittels des Pneumatikzylinders 30 können die Prüfkopfhalterung 20 sowie die Gegenhalterung 22 aus einer ersten, geschlossenen Stellung in eine zweite, geöffnete Stellung gesteuert werden. Die Prüfkopfhalterung 20 sowie die Gegenhalterung 22 weisen jeweils Gleitelemente 38, 40 wie Gleitplatten auf, die parallel oder im Wesentlichen parallel zueinander und zu Seitenflächen 34, 36 der Längsversteifungsträger 12 verlaufen. In der zweiten, geöffneten Stellung sind die Gleitplatten 38, 40 mit einem Abstand zu den Seitenflächen 34, 36 angeordnet. In dieser Stellung kann die Prüfkopfanordnung 16 über dem zu prüfenden Bauteilabschnitt 12 positioniert werden.

Durch Ansteuerung des Pneumatikzylinders 30 kann die Prüfkopfanordnung 16 von der zweiten, geöffneten Stellung in eine erste, geschlossene Stellung gesteuert werden, in der die Gleitplatten 38, 40 federvorgespannt an den Seitenflächen 34, 36 der Längsversteifungsträger 12 anliegen. Dazu ist die Prüfkopfhalterung 20 und die Gegenhalterung 22 über ein Federelement 42 wie Zugfeder miteinander gekoppelt.

Die Führungsschiene 28, entlang der die Prüfkopfhalterung 20 sowie die Gegenhalterung 22 verschiebbar angeordnet sind, ist über ein Drehgelenk 44 mit einem Verbindungsblock 46 der Gravitationsausgleichsvorrichtung 18 verbunden. Das Drehgelenk 44 erlaubt eine Schwenk- bzw. Drehbewegung der Prüfkopfanordnung 16 um eine in Längsrichtung der Längsversteifungsträger 12 verlaufenden Achse (Z-Richtung). Durch die Gravitationsausgleichsvorrichtung 18 ist eine schwimmende Lagerung der Prüfkopfanordnung in Y-Richtung realisiert.

Durch die oben beschriebenen Merkmale wird der Vorteil erreicht, dass die Prüfkopfanordnung 16 in mehreren Freiheitsgraden beweglich ist, wobei durch die federvorgespannt an den Seitenflächen 34, 36 der Längsversteifungsträger 12 anliegende Halterungen 20, 22 eine Anpassung an Konturänderungen der Längsversteifungsträger 12 erfolgt, wobei durch die schwimmende Lagerung der Halterungen 20, 22 entlang der Führungsschiene 28 Verlaufsänderungen der Längsversteifungsträger 12 in X-Richtung, d. h. quer zur Längserstreckung der Längsversteifungsträger 12 ausgeglichen werden und wobei durch das Drehlagerelement 44 Änderungen der Neigung der Längsversteifungsträger 12 ausgleichbar sind.

Die Prüfkopfhalterung 20 umfasst einen vorzugsweise metallischen Grundkörper 48 zur Aufnahme eines Prüfkopfes 50 wie Phased-Array-Prüfkopf mit Sende- und Empfangselementen sowie der Gleitplatte 38.

Der Grundkörper 48 ist im Wesentlichen quaderförmig ausgebildet, mit einem Hohlraum 52, der eine Wasserkammer bildet. Die Kammer 52 wird auf einer offenen Seite des Grundkörpers 48 durch die Gleitplatte 38 abgedeckt, welche eine sich in Z-Richtung erstreckende schlitzförmige Öffnung 54 als Wasseraustrittsöffnung umfasst. Die schlitzförmige Öffnung ist zu einer in der X-Z-Ebene des Bauteils 14 verlaufenden Oberfläche hin geöffnet, und weist dort eine schlitzförmige Öffnung 56 auf. Dadurch wird erreicht, dass mittels des Phased-Array-Prüfkopfes 50 auch ein als "Fuß" bezeichneter Übergangsbereich zwischen der Längsversteifungsträger 12 und dem flächigen Bauteil 14 geprüft werden kann.

Der Gleitplatte 38 gegenüberliegend weist der Grundkörper 48 in einer Wandung 58 eine schlitzförmige Öffnung 60 auf, in der der Prüfkopf 50 eingepasst ist und sich innerhalb der Wasserkammer 50 bis hin zu der Gleitplatte 38 erstreckt. In Seitenwandungen 62, 64, welche im Wesentlichen rechtswinklig zu der Vorderwandung 58 sowie der Gleitplatte 38 verlaufen, sind Wasserzuführanschlüsse 66, 68 angeordnet, welche in die Wasserkammer 52 münden.

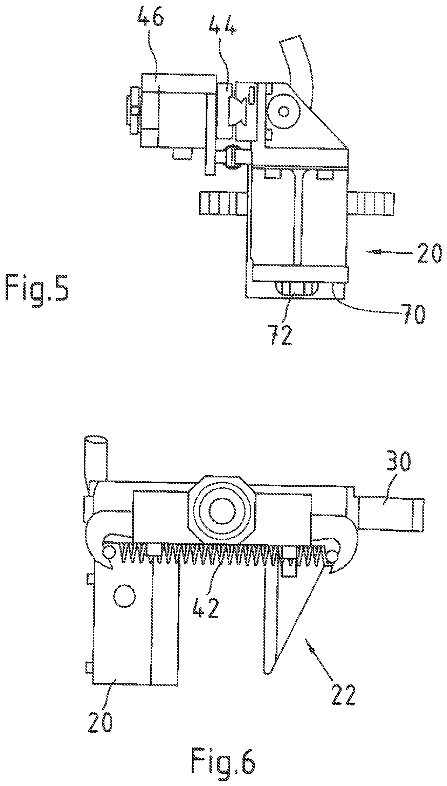

In der Seitenansicht gemäß Fig. 5 ist dargestellt, dass auf einer Unterseite 70 der Prüfkopfhalterung 20 Abstütz- und Führungselemente 72 wie Rollenelemente angeordnet sind, mittels der die Prüfkopfanordnung 16 über die Oberfläche des Bauteils 14 fahrbar ist.

Bekanntlich arbeitet die Vorrichtung mittels lokaler Tauchtechnik. Über die Wasserzuführungen 66, 68 wird Wasser in die Wasserkammer 52 gespült, welches über die schlitzförmige Öffnung 54 gegen die Seitenfläche 34 der Längsversteifungsträger 12 geführt wird. Die Längserstreckung der schlitzförmigen Öffnung 54 in Y-Richtung ist länger als die Höhe der Längsversteifungsträger 12, so dass aus der schlitzförmigen Öffnung 54 austretendes Wasser sowohl einen sich zwischen der Gleitplatte 40 der Gegenhalterung 22 und der Seitenfläche 36 bildenden Zwischenraum als auch einen zwischen Gleitplatte 38 und Seitenfläche 34 gebildeten Zwischenraum ausfüllt, um eine geeignete Ankoppelung der Ultraschallwellen zu erreichen. Zur besseren Wasserverteilung sind in der Gleitplatte 40 der Gegenhalterung 22 sich in Y-Richtung erstreckende Rillen bzw. Nuten 74 zur Wasserverteilung eingebracht.

Ein weiteres Merkmal der Gegenhalterung 22 zeichnet sich dadurch aus, dass diese zum Rippenfuß 58 hin spitz zuläuft, wie der Fig. 6 zu entnehmen ist. Dadurch wird eine Prüfung auch von Längsversteifungsträgern 12 ermöglicht, die gegenüber der Grundfläche des Bauteils 14 geneigt verlaufen.

Um Höhenunterschiede des zu prüfenden Bauteils 12 in Y-Richtung auszugleichen wird die Prüfkopfanordnung 16 mit der Gravitationsausgleichsvorrichtung 18 entlang der zu prüfenden Längsversteifungsträger 12 geführt. Die Gravitationsausgleichsvorrichtung18 umfasst eine Basisplatte 102, welche fest mit einer Handhabungseinrichtung wie Portalroboter (nicht dargestellt) verbindbar ist. Von einer Oberseite der Basisplatte 102 erstrecken sich Führungszylinder 104, 106, welche mit Abstand zueinander parallel angeordnet sind. In den Führungszylindern 104, 106 sind Führungsstangen 108, 110 axial verschiebbar gelagert. Erste, untere Enden der Führungsstangen 110, 108, welche sich unterhalb der Basisplatte 102 erstrecken, sind über einen Verbindungsblock 112 miteinander verbunden. In dem Verbindungsblock ist das Drehgelenk 44 angeordnet, an dem die Prüfkopfanordnung 16 befestigt ist.

Zweite, obere Enden 120, 122 der Führungsstangen 110, 108, welche sich oberhalb der Basisplatte 102 erstrecken, sind ebenfalls über ein Verbindungselement 124 miteinander verbunden. Das Verbindungselement 124 ist mit einem geschlossenen Band 130 verbunden, welches über eine erste Umlenkrolle 126 und eine zweite Umlenkrolle 128 (nicht dargestellt) geführt wird. Ferner ist das Band 130 mit einem Gravitationsgegengewicht 132 gekoppelt, welches entlang von Führungsstangen 134, 136 entgegensetzt zu der Bewegung des Prüfkopfes 10 verschiebbar geführt ist. Enden der Führungsstangen 134, 136 sind über eine Achse miteinander verbunden, auf der die erste Umlenkrolle 126 zwischen den Führungsstangen umlaufend drehbar gelagert ist. Die zweite Umlenkrolle 128 ist in der Basisplatte 102 drehbar gelagert.

Ferner ist auf der Basisplatte 110 ein Pneumatikzylinder 138 vorgesehen, vorzugsweise zwischen den Führungsstangen 110, 108, wobei eine Kolbenstange 140 des Pneumatikzylinders 138 mit dem Verbindungsblock 112 verbunden ist, um den Prüfkopf 10 in Arbeitsposition zu justieren.

Ein Verfahren zur Prüfung von insbesondere der Längsversteifungsträger 12 des flächigen Bauteils 14 zeichnet sich dadurch aus, dass die Prüfkopfhalterung 20 und Gegenhalterung 22 zunächst in geöffneter Stellung über dem Bauteilabschnitt 12 angeordnet werden. Nach einer Sicherheitsüberprüfung durch Abfragen von Endschaltern, welche die Endpositionen der Prüfkopfhalterungen 20 sowie die der Gegenhalterungen 22, prüfen, wird der Wasserzulauf geöffnet und die Prüfkopfanordnung 16 wird durch die Handhabungsmaschine über dem Bauteilabschnitt 12 abgesetzt.

Durch Ansteuerung des Pneumatikzylinders wird die Prüfkopfhalterung 20 und die Gegenhalterung 22 in die geschlossene Stellung gesteuert, so dass die Halterungen 20, 22 federvorgespannt an den Seitenflächen 34, 36 anliegen.

Anschließend wird die Prüfkopfanordnung entlang Richtung (Z-Richtung) entlang der Längsversteifungsträger 12 verfahren und Messwerte aufgenommen, wobei die Ultraschallprüfung vorzugsweise nach dem Amplituden-Laufzeit-Ortskurven-Verfahren (ALOK-Verfahren) und/oder alternativ kombiniert mit der Standard-Blendenauswertung durchgeführt wird.

## Patentansprüche

1. Vorrichtung (10) zur Ultraschallprüfung eines von einer in einer X-Z-Ebene liegenden Oberfläche eines flächigen Bauteils (14) in Y-Richtung quer abstehenden und in Z-Richtung verlaufenden streifenförmigen Bauteilabschnitts (12) wie Längsversteifungsträgers mittels lokaler Tauchtechnik, umfassend
- eine einen Prüfkopf (50) aufweisende Prüfkopfanordnung (16), sowie
- eine automatisch betriebene Handhabungseinrichtung wie Portalroboter mittels der die Prüfkopfanordnung (16) entlang des Bauteilabschnitts (12) verfahrbar ist, wobei die Prüfkopfanordnung (16) einen den Prüfkopf (50) aufnehmenden Prüfkopfhalter (20) sowie einen Gegenhalter (22) aufweist, welche jeweils an einer Seitenfläche des Bauteilabschnitts (12) anliegen, wobei die Prüfkopfanordnung (16) eine in X-Richtung verlaufende Führungsschiene (28) aufweist, entlang zumindest der Prüfkopfhalter (20) quer zu dem Bauteilabschnitt (12) längsbeweglich verschiebbar gelagert ist und wobei der Prüfkopfhalter (20) und der Gegenhalter (22) über ein Bestätigungselement (30) miteinander gekoppelt und aus einer geschlossenen ersten Stellung in eine geöffnete zweite Stellung steuerbar sind, und die Vorrichtung (10) eine als Gravitationsausgleichsvorrichtung ausgebildete Haltevorrichtung (18) aufweist, über die die Prüfkopfanordnung (16) mit der automatisch betriebenen Handhabungseinrichtung verbunden ist,
wobei die Haltevorrichtung (18) eine mit der automatisch betriebenen Handhabungseinrichtung verbundene Basisplatte (102) mit einer Oberseite aufweist, von der sich Führungszylinder (104, 106) erstrecken, in denen erste Führungsstangen (108, 110) axial verschiebbar gelagert sind, wobei erste Enden der Führungsstangen (108, 110), die sich unterhalb der Basisplatte (102) erstrecken, über einen Verbindungsblock (112) miteinander verbunden sind, welcher ein Drehgelenk (44) aufweist, an dem die Prüfkopfanordnung (16) befestigt und um eine in Z-Richtung verlaufende Achse drehbeweglich gelagert ist, wobei zweite Enden der Führungsstangen (108, 110), die sich oberhalb der Basisplatte (102) erstrecken, über ein Verbindungselement (124) miteinander verbunden sind, welches über ein über Umlenkrollen (126, 128) geführtes Band (130) mit Gegengewicht (132) gekoppelt ist, welches entlang von zweiten Führungsstangen (134, 136) entgegengesetzt zu der Bewegung der Prüfkopfanordnung (16) derart verschiebbar geführt ist, dass die Prüfkopfanordnung (16) in Y-Richtung längsbeweglich schwimmend gelagert ist, und sowohl der Prüfkopfhalter (20) als auch der Gegenhalter (22) entlang der in X-Richtung verlaufenden Führungsschiene (28) schwimmend gelagert ist und jeweils in Richtung einer Seitenfläche (34, 36) des Bauteilabschnitts (12) federvorgespannt sind.

2. Vorrichtung nach Anspruch 1,
**dadurch gekennzeichnet,**
**dass** das Betätigungselement (3) ein Pneumatikzylinder ist.

3. Vorrichtung nach Anspruch 1,
**dadurch gekennzeichnet,**
**dass** Prüfkopfhalter (20) und Gegenhalter (22) über ein Federelement (28) wie Zugfeder miteinander gekoppelt sind.

4. Vorrichtung nach zumindest einem der Ansprüche 1 bis 3,
**dadurch gekennzeichnet,**
**dass** dem Prüfkopfhalter (20) sowie dem Gegenhalter (22) jeweils ein Endschalter (142, 144) wie Näherungsschalter zugeordnet ist.

5. Vorrichtung nach zumindest einem der Ansprüche 1 bis 4,
**dadurch gekennzeichnet,**
**dass** der Prüfkopfhalter (20) und der Gegenhalter (22) bauteilseitig jeweils eine Gleitplatte (38, 40) aufweist, wobei die Gleitplatte (38) des Prüfkopfhalters (20) eine sich in Y-Richtung erstreckende schlitzförmige Öffnung (54) mit einer bodenseitigen Öffnung (56) aufweist, und dass die Gleitplatte (40) des Gegenhalters (22) in Y-Richtung verlaufende Nuten (74) aufweist.

6. Vorrichtung nach Anspruch 5,
**dadurch gekennzeichnet,**
**dass** die Gleitplatten (38, 40) aus einem Kunststoff ausgebildet sind.

7. Vorrichtung nach zumindest einem der Ansprüche 1 bis 6,
**dadurch gekennzeichnet,**
**dass** der Prüfkopfhalter (20) auf einer Unterseite (70) Stütz- und Führungselemente (72) wie Rolle zur Abstützung und Führung auf dem zu prüfenden Bauteil (14) aufweist.

8. Vorrichtung nach Anspruch 5 oder 6,
**dadurch gekennzeichnet,**
**dass** der Prüfkopfhalter (20) zur Aufnahme des Prüfkopfs (50) wie Phase-Array-Prüfkopf einen vorzugsweise quaderförmigen, vorzugsweise metallischen Grundkörper (48) aufweist, mit einer eine Wasserkammer (52) bildenden Ausfräsung, welche durch die Gleitplatte (38) des Prüfkopfhalters (20) abgedeckt ist, dass in einer der Gleitplatte (38) des Prüfkopfhalters (20) gegenüberliegenden Wandung (58) eine Aussparung (60) zur Aufnahme des Prüfkopfes (50) ausgebildet ist und dass in Seitenwänden (62, 64) des Grundkörpers (48) in die Wasserkammer (52) mündende Zuläufe (66, 68) angeordnet sind.

## Claims

1. A device (10) for the ultrasonic testing by means of a local immersion technique of a strip-shaped component section (12), such as a stringer, which protrudes transversely in the Y-direction from a surface lying in a X-Z plane of a flat component (14) and extends in the Z-direction, comprising
- a test head assembly (16) having a test head (50), and
- an automatically operated handling device, such as a portal robot, by means of which the test head assembly (16) can be moved along the component section (12), wherein the test head assembly (16) has a test head holder (20) accommodating the test head (50) and a counter-holder (22), each of which abut against a side surface of the component section (12), wherein the test head assembly (16) has a guide rail (28) extending in the X-direction, along which at least the test head holder (20) is displaceably mounted in a longitudinally movable manner transversely to the component section (12), and wherein the test head holder (20) and the counter-holder (22) are coupled to each other by means of an actuating member (30) and can be driven from a closed first position into an opened second position, and the device (10) has a holding device (18), which is configured as a gravitation-compensating device and via which the test head assembly (16) is connected to the automatically operated handling device,
wherein the holding device (18) has a base plate (102), which is connected to the automatically operated handling device, with a top side from which guide cylinders (104, 106) extend in which first guide rods (108, 110) are mounted in an axially displaceable manner, wherein first ends of the guide rods (108, 110) extending underneath the base plate (102) are connected to each other via a connecting block (112) having a rotary joint (44) to which the test head assembly (16) is attached and rotatably mounted about an axis extending in the Z-direction, wherein second ends of the guide rods (108, 110) extending above the base plate (102) are connected to each other via a connecting member (124), which is coupled, via a belt (130) guided over pulleys (126, 128), to a counterweight (132) that is displaceably guided along second guide rods (134, 136) in an opposite direction to the movement of the test head assembly (16) in such a way that the test head assembly (16) is floatingly mounted in a longitudinally movable manner in the Y-direction, and both the test head holder (20) and the counter-holder (22) are floatingly mounted along the guide rail (28) extending in the X-direction and are each spring-biased in the direction of a side surface (34, 36) of the component section (12).

2. The device according to claim 1,
**characterized in that**
the actuating member (3) is a pneumatic cylinder.

3. The device according to claim 1,
**characterized in that**
the test head holder (20) and the counter-holder (22) are coupled to each other via a spring member (28), such as a tension spring.

4. The device according to at least one of the claims 1 to 3,
**characterized in that**
a limit switch (142, 144), such as a proximity switch, is respectively allocated to the test head holder (20) and the counter-holder (22).

5. The device according to at least one of the claims 1 to 4,
**characterized in that**
the test head holder (20) and the counter-holder (22) each have a slide plate (38, 40) on the side of the component, wherein the slide plate (38) of the test head holder (20) has a slit-shaped opening (54), which extends in the Y-direction, with a opening (56) at the bottom, and that the slide plate (40) of the counter-holder (22) has grooves (74) extending in the Y-direction.

6. The device according to claim 5,
**characterized in that**
the slide plates (38, 40) are formed from a plastic.

7. The device according to at least one of the claims 1 to 6,
**characterized in that**
the test head holder (20) has on a bottom side (70) supporting and guiding members (72), such as a roller, for support and guidance on the component (14) to be tested.

8. The device according to claim 5 or 6,
**characterized in that**
the test head holder (20) has a preferably cuboid, preferably metallic basic body (48) for accommodating the test head (50), such as a phase array test head, with a milled-out portion forming a water chamber (52) covered by the slide plate (38) of the test head holder (20), that a recess (60) for accommodating the test head (50) is formed in a wall (58) situated opposite from the slide plate (38) of the test head holder (20), and that feeds (66, 68) leading into the water chamber (52) are disposed in side walls (62, 64) of the basic body (48).

## Revendications

1. Dispositif (10) de contrôle par ultrasons, au moyen d'une technique d'immersion locale, d'une section de composant (12) en forme de bande, telle qu'un support de rigidification longitudinale, qui, depuis une surface d'un composant plan (14) située dans un plan X-Z, fait saillie transversalement dans la direction Y et s'étend dans la direction Z, comprenant
- un ensemble de palpeur (16) comprenant un palpeur (50), ainsi qu'
- un dispositif de manipulation à actionnement automatique tel que des robots à portique au moyen desquels ledit ensemble de palpeur (16) est déplaçable le long de la section de composant (12), ledit ensemble de palpeur (16) comprenant un support de palpeur (20) recevant le palpeur (50) ainsi qu'un contre-support (22) qui s'appliquent chacun sur une surface latérale de la section de composant (12), dans lequel l'ensemble de palpeur (16) présente un rail de guidage (28) s'étendant dans la direction X et le long duquel au moins le support de palpeur (20) est logé à coulissement de manière à être longitudinalement déplaçable transversalement à la section de composant (12), et dans lequel ledit support de palpeur (20) et ledit contre-support (22) sont couplés l'un à l'autre par l'intermédiaire d'un élément d'actionnement (30) et peuvent être commandés pour passer d'une première position fermée à une deuxième position ouverte, et ledit dispositif (10) comprend un dispositif de maintien (18) qui est conçu en tant que dispositif de compensation gravitationnelle et par lequel ledit ensemble de palpeur (16) est relié au dispositif de manipulation à actionnement automatique,
dans lequel le dispositif de maintien (18) présente une plaque de base (102) reliée au dispositif de manipulation à actionnement automatique et ayant une face supérieure à partir de laquelle s'étendent des vérins de guidage (104, 106) à l'intérieur desquels de premières tiges de guidage (108, 110) sont logées à déplacement axiale, dans lequel de premières extrémités des tiges de guidage (108, 110) qui s'étendent au-dessous de la plaque de base (102) sont reliées entre elles par un bloc de liaison (112) qui présente un joint rotatif (44) sur lequel l'ensemble de palpeur (16) est fixé et est logé de manière à être déplaçable en rotation autour d'un axe s'étendant dans la direction Z, dans lequel de deuxièmes extrémités des tiges de guidage (108, 110) qui s'étendent au-dessus de la plaque de base (102) sont reliées l'une à l'autre par un élément de liaison (124) qui est couplé par une bande (130) guidée sur des poulies de renvoi (126, 128) et ayant un contrepoids (132) qui est guidé à coulissement le long de deuxièmes tiges de guidage (134, 136), de manière opposée au mouvement de l'ensemble de palpeur (16), de telle sorte que l'ensemble de palpeur (16) est logé de manière flottante de manière à être déplaçable longitudinalement dans la direction Y,
et
aussi bien le support de palpeur (20) que le contre-support (22) sont logés de manière flottante le long du rail de guidage (28) s'étendant dans la direction X et sont chacun précontraints par ressort dans la direction d'une surface latérale (34, 36) de la section de composant (12).

2. Dispositif selon la revendication 1, **caractérisé par le fait que** ledit élément d'actionnement (3) est un vérin pneumatique.

3. Dispositif selon la revendication 1, **caractérisé par le fait que** le support de palpeur (20) et le contre-support (22) sont couplés entre eux par un élément formant ressort (28) tel qu'un ressort de traction.

4. Dispositif selon l'une au moins des revendications 1 à 3, **caractérisé par le fait que** respectivement un interrupteur de fin de course (142, 144), tel qu'un interrupteur de proximité, est associé au support de palpeur (20) ainsi qu'au contre-support (22).

5. Dispositif selon l'une au moins des revendications 1 à 4, **caractérisé par le fait que** le support de palpeur (20) et le contre-support (22) présentent chacun, côté composant, une plaque de glissement (38, 40), dans lequel ladite plaque de glissement (38) du support de palpeur (20) présente une ouverture (54) en forme de fente s'étendant dans la direction Y et ayant une ouverture (56) côté fond, et que la plaque de glissement (40) du contre-support (22) présente des rainures (74) s'étendant dans la direction Y.

6. Dispositif selon la revendication 5, **caractérisé par le fait que** les plaques de glissement (38, 40) sont réalisées dans une matière plastique.

7. Dispositif selon l'une au moins des revendications 1 à 6, **caractérisé par le fait que**, sur une face inférieure (70), le support de palpeur (20) présente des éléments d'appui et de guidage (72), tels que galets, destinés à appuyer et à guider sur le composant (14) à contrôler.

8. Dispositif selon la revendication 5 ou 6, **caractérisé par le fait que** le support de palpeur (20) destiné à recevoir le palpeur (50), tel qu'un palpeur phased array, comprend un corps de base (48) de préférence en parallélépipède rectangle, de préférence métallique, ayant une entaille fraisée qui forme une chambre à eau (52) et qui est recouverte par la plaque de glissement (38) du support de palpeur (20), qu'un évidement (60) destiné à loger le palpeur (50) est ménagé dans une paroi (58) située en regard de la plaque de glissement (38) du support de palpeur (20), et que des ouvertures d'alimentation (66, 68) qui débouchent dans la chambre à eau (52) sont aménagées dans des parois latérales (62, 64) du corps de base (48).
